Europäisches Patentamt

(19) European Patent Office

Office européen des brevets

(11) Publication number: **0 106 424**
**A1**

## (12) EUROPEAN PATENT APPLICATION

(21) Application number: 83302026.6

(22) Date of filing: 12.04.83

(51) Int. Cl.³: **B 22 F 7/08**
**F 16 K 27/00**

(30) Priority: 04.10.82 US 432617

(43) Date of publication of application:
25.04.84 Bulletin 84/17

(84) Designated Contracting States:
AT BE CH DE FR GB IT LI LU NL SE

(71) Applicant: COLT INDUSTRIES OPERATING CORP.
P.O. Box 88 Parkway West & Route 60
Pittsburgh Pennsylvania 15230(US)

(72) Inventor: McCollough, William Lee
5539 Grubbs Road Richland
Gibsonia Pennsylvania 15044(US)

(72) Inventor: Wulczynski, Frank Joseph
250 Happy Hollow Road
Elizabeth Pennsylvania(US)

(74) Representative: Sheader, Brian N. et al,
ERIC POTTER & CLARKSON 5 Market Way Broad Street
Reading Berkshire, RG1 2BN(GB)

(54) Valve body and method of producing same.

(57) A valve body (12) and method of producing same, particularly adapted for use with highly corrosive fluids having the internal passages (14, 16) thereof lined with a metal (24') more resistant to corrosion than the remainder of the valve body (12); the lining is of consolidated metal powder (24') which has been bonded to the passage interior walls (20, 24) and consolidated by hot isostatic pressing.

EP 0 106 424 A1

## VALVE BODY AND METHOD OF PRODUCING SAME

This invention relates to a valve body and to a method of producing same.

In many applications wherein fluids, such as gas and liquids, are transmitted through valves when said fluids are highly corrosive, such as hydrogen sulfide gas, it is desirable that the valve be resistant to this highly corrosive madia. Materials for this purpose are nickel-base corrosion resistant alloys, such as UNS NO 6625 and UNS N-102-76, which are extremely expensive and if the valve bodies are manufactured therefrom it adds considerably to the cost of installations of this type.

It is accordingly an object of the present invention to provide a valve body and method of producing same wherein a highly corrosion resistant material is used as a lining for the internal fluid passages of the valve body with the remainder of the valve body being of a less expensive and less corrosion resistant material to result in a valve that has combination of low cost and resistance to corrosive fluids.

Broadly in the practice of the invention a valve body is provided having an internal passage adapted for the passage therethrough of highly corrosive fluids, such as hydrogen sulfide or natural gas having a high hydrogen sulfide content. Typically, a second intersecting passage is provided to accommodate a valve stem. All of these interior passages are, of course, subject to the highly corrosive fluids with which the valve is used. In accordance with the invention there is confined a lining of powdered metal on the walls of the internal passages. The powdered metal is of a metallurgical composition more resistant to the corrosive fluid than the material from which the remainder of the valve body is constructed. This assembly of the valve body and confined powdered metal lining is heated and hot isostatically pressed to densify and bond the powdered metal to said internal passages of the valve body to form said corrosion resistant lining. Specifically, the lining of powdered metal is confined within a space defined by the passage walls and an internal sleeve or sleeves that is inserted within each passage in spaced apart relation from the wall thereof. The powdered metal is then filled in this space between the sleeve insert and the passage wall. Typically, the assembly is evacuated to a subatmospheric pressure prior to hot isostatic compacting. The sleeve may be made from any conventional material but mild carbon steel is preferred. This material may also be used for the valve body. After hot isostatic pressing the passages are machined in the conventional manner which machining operation serves to remove the sleeve from each passage.

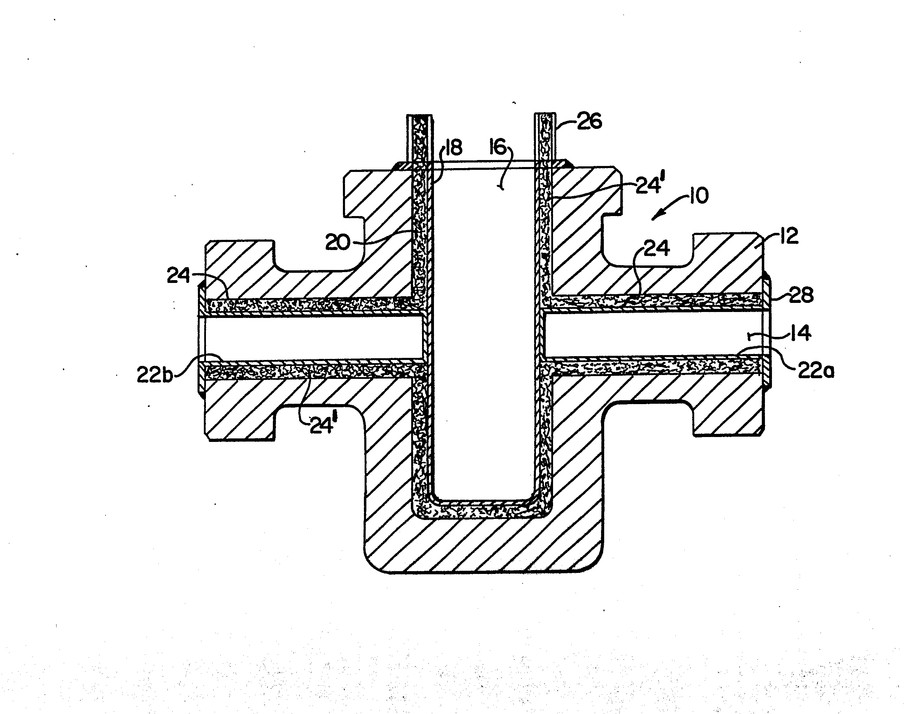

The invention will be more particularly described with reference to the accompanying drawing which illustrates in sectional elevation a valve body according to the present invention and the method of producing same.

With reference to the drawing there is shown an assembly designated generally as 10 that includes a valve body 12, which may be of mild steel. The valve body has a through passage 14 through which the fluid passes into and out of the valve. Intersecting passage 14 is a second passage 16 adapted to accomodate in the conventional manner a valve stem (not shown). In passage 16 there is inserted a mild steel sleeve 18 which is concentric with and in spaced apart relation from the wall 20 of passage 16. Likewise, similar sleeves 22a and 22b are provided in passage 14 in spaced apart relation from the walls 24 thereof and in abutting relation to sleeve 18 of intersecting passage 16. These sleeves 18, 22a and 22b may be of dimensions permitting them to be secure within the valve body without requiring welding inside the valve body; however, welding may be performed although such is not the preferred practice. It is preferred that welding not be used because welding is difficult and expensive to perform within the relatively small confines within the valve body. The space between the sleeves and the walls of the passages are filled with powdered metal 24'. Stem 26 which is shown in the drawing in association with sleeve 18 may be used to facilitate the introduction of the powdered metal 24', said stem being subsequently removed after filling with the powdered metal and ring-shaped caps 28 as shown in the drawing in association with sleeves 22a and 22b are used to seal the powder within the spaces between the passage walls 20,24 and the sleeves 18, 22a, 22b. Prior to so doing, however, it is conventional practice to outgas the powder to subatmospheric pressure to remove deleterious material, such as oxides, which facilitates bonding during subsequent hot isostatic pressing. Hot isostatic pressing may be performed as is well known under subatmospheric pressure within a gas pressure vessel, commonly termed an "autoclave" at high pressures. Suitable temperatures for heating to hot isostatic pressing are 927 to 1204$^O$C (1700 to 2200$^O$F) and pressures of the order of 845 to 1056 kg/cm$^2$ (12,000 to 15,000 psi) may be employed. The powdered metal 24' is of a highly corrosion resistant material such as IN 625, C 276.

The term "valve body" as used herein means any device interposed in pipe or tubing and through which fluid flow is provided, including valve bodies, tees, elbows, tube heads, tube hangers and the like.

4

CLAIMS

1. A method of producing a valve body (12) having an internal passage (14 or 16) and particularly adapted for use with highly corrosive fluids, characterised in that said method comprises confining a lining of powdered metal (24') on said internal passage (14 or 16), said powdered metal (24') being of a metallurgical composition more resistant to said corrosive fluid than the material from which said valve body (12) is constructed, heating said powdered metal (24') and hot-isostatic pressing said powdered metal (24') to densify and bond said powdered metal (24') to said internal passage (14 or 16) of said valve body (12).

2. A method according to claim 1, characterised in that said lining of powdered metal (24') is confined within a space defined by a wall (20 or 24) of said internal passages (14 or 16) and a sleeve (18, 22a, 22b) inserted within said passage (14 or 16) in spaced-apart relation to said wall (20 or 24).

3. A method according to claim 2, characterised in that said space and associated lining of powdered metal (24') is evacuated to subatmospheric pressure prior to hot isostatic compacting.

4. A method according to claim 2 or 3, characterised in that said sleeve (18, 22a, 22b) is made from mild carbon steel.

5. A method of producing a valve body (12) having a first internal through passage (14) adapted for the flow therethrough of highly corrosive fluids and a second passage (16) intersecting said first passage (14) within said valve body (12) and adapted to accommodate a valve stem, characterised in that said method comprises inserting a first sleeve (18) within one of said passages (16), said sleeve (18) intersecting the other passage (14) and being in spaced-apart relation from a wall (20) of said passage (16) within which it is inserted to form a space therebetween, inserting a second sleeve (22a) and a third sleeve (22b) within said other passage (14) and said second and third sleeves (22a, 22b) abutting said first sleeve (18)

5

at the intersection of said passages (14, 16) and in spaced-apart relation with a wall (24) of said passage (14) within which said second and third sleeves (22a, 22b) are inserted to form a space therebetween, filling said spaces with powdered metal (24') having a metallurgical composition more resistant to said corrosive fluid than the material from which said valve body (12) is constructed to form a lining thereof confined between said sleeves (18, 22a, 22b) and walls (20, 24) of said passsges (14, 16), evacuating said spaces and associated lining of powdered metal (24'), heating and hot-isostatic pressing the powdered metal (24') to densify and bond said powdered metal (24') to said internal passages (14, 16) of said valve body (12).

6. A method according to claim 5, characterised in that said sleeves (18, 22a, 22b) are constructed from mild carbon steel.

7. A valve body (12) particularly adapted for use with highly corrosive fluids, said valve body (12) having an internal passage (14 or 16) adapted for flow of fluid through said valve body (12), characterised in that a lining of campacted powdered metal (24') is bonded to said internal passage (14 or 16), said powdered metal (24') being of a metallurgical compostition more resistant to said corrosive fluid than the material from which said valve body (12) is constructed.

8. A valve body according to claim 7, characterised in that said powdered metal (24') is a nickel-base corrosion resistant alloy.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 073 783 (CAMERON IRON WORKS)<br>* Claims 1,4-8,12 *<br>--- | 1-8 | B 22 F 7/08<br>F 16 K 27/00 |
| X | FR-A-2 337 000 (INCO EUROPE LTD.)<br>* Claims 1,4,8,9; page 12, lines 12-17 *<br>--- | 1-8 | |
| A | US-A-3 753 704 (THE INTERNATIONAL NICKEL CO.)<br>--- | | |
| A | US-A-4 016 008 (THE INTERNATIONAL NICKEL CO.)<br>--- | | |
| A | FR-A-2 137 702 (I.C.I.)<br>----- | | TECHNICAL FIELDS SEARCHED (Int. Cl. ³)<br><br>B 22 F<br>F 16 K |

The present search report has been drawn up for all claims

| Place of search THE HAGUE | Date of completion of the search 09-12-1983 | Examiner SCHRUERS H.J. |
|---|---|---|